# DEMANDE DE BREVET EUROPEEN

(11) **EP 1 484 898 A1**
(43) Date de publication de la demande: **08.12.2004**
(21) Numéro de dépôt: 04291378.0
(22) Date de dépôt: 03.06.2004
(51) Int. Cl.: H04L 29/06

(54) **Procédé de télécommunication entre un terminal local et un terminal central et système mettant en oeuvre le procédé**

(30) Priorité: 05.06.2003 FR 0306797
(71) Demandeur: Johnson Controls Technology Company, Holland, MI 49423 (US)
(72) Inventeur: Cailleau, Philippe, 95240 Cormeil En Parisis (FR); Cornil, Hubert, 78400 Chatou (FR)
(74) Mandataire: Bloch, Gérard

(57) **Abrégé**

Selon le procédé, mis en oeuvre entre un terminal numérique central (9) et au moins un terminal numérique distant (8), pour transférer, sur un réseau de transmission déterminé (7), des données délivrées en temps réel selon un format déterminé,
a) on établit une liaison physique sur le réseau (7) entre les terminaux central (9) et distant (8) et on transmet une trame de configuration TC,
b) à partir de la trame de configuration, on configure les terminaux central (9) et distant (8),
c) on établit une liaison logique sur le réseau entre les terminaux (9, 8) et
d) on transfère les données selon une trame de transfert TT.

L'invention s'applique bien au diagnostic du fonctionnement des véhicules.

## Description

L'invention concerne le transfert de données numériques temps réel entre des terminaux émettant de telles données, d'une part, et un terminal central pour leur traitement centralisé, d'autre part, le transfert utilisant un réseau de télécommunication de grande accessibilité.

Par réseau de grande accessibilité, on entend un réseau de télécommunication publique, tel que le réseau téléphonique commuté RTC, en utilisant l'Internet, par exemple via une liaison ADSL (Asymmetrical Digital Subscriber Line), ou le réseau RNIS (Réseau Numérique à Intégration de Service), ou encore le GPRS (Général Packet Radio System). Dans ces réseaux, les temps de propagation des données transmises, dépendant du routage, de la charge du réseau, et du taux de reprise d'erreur, sont aléatoires et imprévisibles.

Les données numériques temps réel dont il est question ici sont des données collectées pendant le déroulement d'un processus temps réel et donc de durée non négligeables.

L'invention trouve plus particulièrement son application pour le transfert de données issues de calculateurs embarqués dans des véhicules automobiles, tels que calculateurs moteur ou calculateurs habitacle, vers des stations de diagnostic de fonctionnement de ces véhicules, par exemple des serveurs de données, spécifiques des véhicules sous diagnostic, comportant des logiciels de test et/ou de recherche de pannes.

Actuellement, les stations de diagnostic spécifiques des véhicules à tester sont directement connectées aux calculateurs embarqués desdits véhicules au moyen d'une prise spécifique reliée à leur ligne série VCI (Vehicle Communication Interface) sur lequel les données temps réel nécessaires sont disponibles.

Comme à chaque marque, type et modèle de véhicule correspond une station de diagnostic ou au moins un logiciel de test spécifique, ainsi qu'une prise spécifique, tout garage appelé à effectuer des opérations de diagnostic doit être équipé d'autant de stations de diagnostic et de serveurs des bases de données associées qu'il doit tester de marques, types et modèles différents.

Cette contrainte comporte de nombreux inconvénients en termes de coûts de conception, de fabrication et d'achat des stations, d'occupation de surface, de maintenance des stations, de gestion des matériels, etc ...

On a déjà proposé de déporter les serveurs des bases de données spécifiques sur des sites centralisés, consultables à distance par les stations de diagnostic locales, par le canal des réseaux de télécommunication numérique de grande accessibilité. Un terminal local, connecté à la station locale, et un terminal central, connecté au serveur central, permettent de réaliser une consultation des données par le réseau.

Mais, à cause des risques de variation des temps de propagation dans les réseaux de télécommunication qui, par dépassement du temps de maintien maximal entre deux échanges entre calculateur et station, dépassement du temps de rupture (ou de relance de l'échange demandé par la station ou le calculateur), ou autre dépassement, peuvent mettre le calculateur ou la station en état de blocage, et à cause de la nécessité de respecter les datations des données collectées en temps réel, on a renoncé à déporter les stations de diagnostic locales sur un site central.

On ne fait donc que l'économie de non duplication des bases de données. Localement, il faut toujours autant de stations de diagnostic qu'il y a de marques ou de types de véhicules, et les inconvénients ci-dessus demeurent.

Pour les supprimer, la demanderesse propose, malgré les difficultés énoncées, de déporter entièrement les stations locales de diagnostic sur un site centralisé, qui ne comporte alors qu'une station de diagnostic et son serveur de base de données associées pour chaque marque, type, voire chaque modèle de véhicule.

A cet effet, l'invention concerne un procédé de télécommunication entre un terminal numérique central et au moins un terminal numérique distant, pour transférer, sur un réseau de transmission déterminé, des données délivrées en temps réel entre deux stations, une centrale et une locale, de traitement de données temps réel_ selon un format déterminé, procédé dans lequel :
a) on établit une liaison physique sur le réseau entre les terminaux central et distant et on transmet une trame de configuration,
b) à partir de la trame de configuration, on configure les terminaux central et distant,
c) on établit une liaison logique sur le réseau entre les terminaux et
d) on transfère les données selon une trame de transfert TT.

Par la configuration préalable de la liaison logique au moyen de la liaison physique, on établit le lien logique compatible à la marque, au type, au modèle du véhicule à tester.

De préférence, pour transférer les données,
a) le terminal émetteur, central ou distant, encapsule les données,
b) transmet les données encapsulées,
c) le terminal récepteur, distant ou central, réceptionne les données, et
d) décapsule les données.

Les contraintes imposées par le protocole du réseau de télécommunication utilisé sont ainsi rendues transparentes aux deux extrémités de la liaison.

De préférence encore, pour éviter un blocage du type de celui évoqué ci-dessus à l'une quelconque des stations de traitement, le terminal qui lui est le plus proche lui envoie un signal d'occupation identique au signal d'occupation de l'autre station de traitement.

Selon un mode préféré de réalisation du procédé selon l'invention, en l'absence de réponse de la station émettrice, le terminal récepteur émet vers la station réceptrice des réponses fictives de la station émettrice, délivrées au rythme d'émission des données temps réel de la station émettrice. Ces réponses fictives peuvent par exemple être la répétition de la dernière réponse effective de la station émettrice. Ce mode de réalisation ne respecte les datations qu'imparfaitement, mais contribue aussi à éviter les blocages des stations et calculateurs.

Pour préserver exactement la datation des données, selon un mode plus élaboré de réalisation du procédé selon l'invention, mais aussi plus coûteux, on encapsule les données avec des données de temps sur le terminal émetteur et on émet ces données après décapsulation, en sortie du terminal récepteur, à un rythme respectant les données de temps desdites données. Ainsi une séquence de données temps réel peut être transmise par le terminal récepteur sans altération du rythme des données de la séquence temps réel en amont du terminal émetteur. La séquence est simplement différée de la durée de la transmission sur le réseau.

Selon une mise en oeuvre préférée de l'invention, les données émises par le terminal distant sont issues d'un calculateur embarqué d'un véhicule automobile, lequel détermine des caractéristiques spécifiques dans la trame de configuration, et les données émises par le terminal central sont issues d'un serveur spécifique choisi parmi un ensemble de serveurs par ledit terminal en fonction de caractéristiques spécifiques contenues dans la trame de configuration.

Quel que soit la marque, le type, le modèle du véhicule sous test, les données spécifiques émises sont transmises sur le serveur spécifique correspondant.

Avantageusement, le terminal central émet des données comportant des initialisations de session de diagnostic du serveur spécifique vers le calculateur embarqué, lequel lui répond, via le terminal distant, par des données temps réel élaborées par lui et traitées par ledit serveur en temps réel décalé.

L'invention concerne également un système pour la mise en oeuvre du procédé ci-dessus, comportant un terminal central relié à une station de traitement et au moins un terminal local relié à un calculateur délivrant des données temps réel, caractérisé par le fait que les terminaux central et local sont reliés par un réseau de télécommunication public.

Plus précisément, l'invention concerne un système d'aide au diagnostic de fonctionnement d'un véhicule automobile mettant en oeuvre le procédé de l'invention, comportant un calculateur délivrant des données temps réel sur un bus numérique, le système comportant une station de diagnostic pouvant être connectée sur le bus numérique, caractérisé par le fait que la station de diagnostic est déportée sur un site central et que les données temps réel lui sont transmises, via un réseau de télécommunication, par un terminal local connecté sur ledit bus.

De préférence, le site central regroupe plusieurs stations de diagnostic chacune compatible à une marque ou un type particulier de véhicules et un terminal central comportant un module de sélection agencé pour sélectionner la station de diagnostic compatible aux données temps réel transmises.

Avantageusement, les terminaux local et central comportent chacun un module de configuration agencé pour émettre et recevoir une trame physique de configuration, un microprocesseur pour configurer lesdits terminaux, un module logique d'encapsulation et de décapsulation des données temps réel et de codage et de décodage de trames de transfert.

De préférence encore, le terminal local ou central comporte une mémoire des données temps réel reçues du réseau, un module de mémorisation et un module de lecture desdites données, et un module de datation des données temps réel à émettre sur le réseau, les datations relevées y étant jointes, et le module de lecture lisant et transmettant localement les données temps réel au rythme des datations qui leur correspondent.

L'invention sera mieux comprise à l'aide de la description suivante du procédé de l'invention et d'une forme de réalisation préférée du système selon l'invention, en référence au dessin y annexé, sur lequel :
- la figure 1 est un schéma par blocs fonctionnels du système ;
- la figure 2 est un schéma par blocs fonctionnels d'une variante du système, convenant bien à une application au diagnostic des véhicules automobiles,
- les figures 3A et 3B sont des diagrammes montrant deux types d'échanges de données temps réel permettant d'éviter les blocages des stations de traitement ;
- les figures 4A et 4B sont des schémas montrant les structures d'une trame de configuration et d'une trame de transfert et
- la figure 5 est un schéma permettant d'expliquer le fonctionnement du rétablissement, en réception, du rythme de délivrance des données temps réel dans une séquence temps réel.

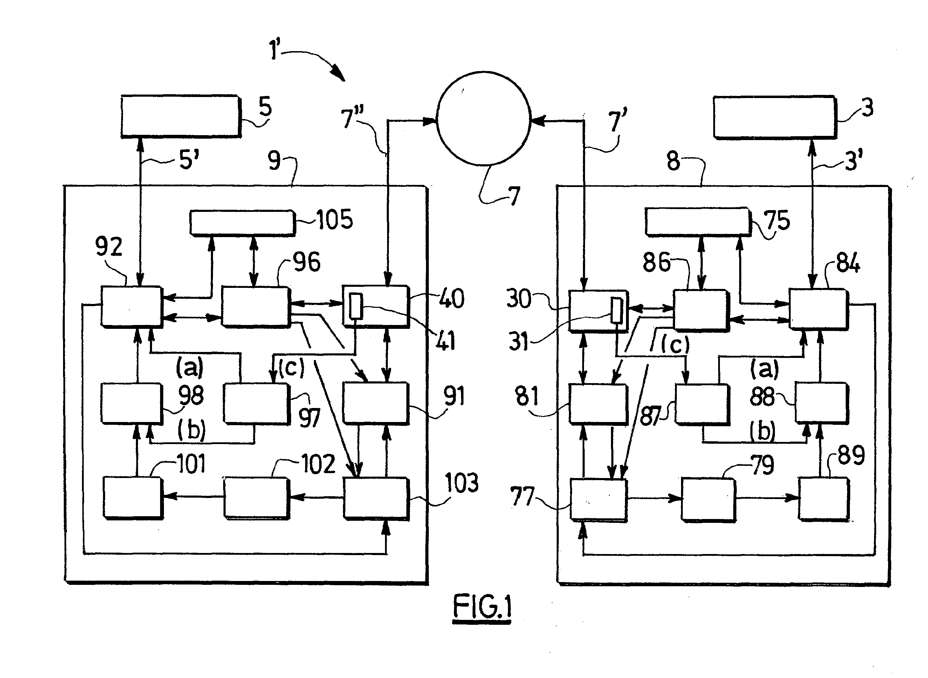

En référence à la figure 1, le système de télécommunication 1' comporte un terminal central 9 relié à une station de traitement 5 par une liaison numérique 5' et au moins un terminal local 8 relié à un calculateur 3 par une autre liaison numérique 3'. Les deux terminaux sont reliés à un réseau de télécommunication public filaire 7 du type RTC, RNIS ou ADSL, par des moyens d'interface 30 (terminal 8) et 40 (terminal 9), typiquement des modem ADSL, à 512 kbps, et des pilotes associés (plus communément connus sous le nom anglo-saxon de driver), agencés pour utiliser les deux plus basses couches (couches physique 1 et de liaison 2) permises par le modèle OSI (Open System Interconnection), et ajouter une pile TCP/IP pour, avec l'ajout d'une sur-couche de sécurité de communication comme par exemple PPP (Point to Point Protocole), utiliser ici le protocole Ethernet en ATM (Asynchronous Transfer Mode) par l'Internet, le RNIS large bande ou un réseaux de télécommunication radio comme le GPRS, permettant un débit suffisant. Mais on peut aussi, dans une configuration plus simple, utiliser un modem RNIS à 128 kbps ou un modem RTC à 56 kbps. Les possibilités sont alors plus limitées.

Les moyens d'interface 30 et 40 alimentent chacun, lorsqu'ils sont en cours d'utilisation, une mémoire interne respectivement 31 et 41 d'occupation de canal (busy) respectivement, qui indique que le terminal est occupé. Ces types de moyens d'interface pour les divers réseaux 7 possibles sont connus de l'homme du métier.

Le calculateur et les stations de diagnostic délivrent aussi des signaux d'occupation, reconnus universellement

Par le réseau 7, les terminaux 8 et 9 peuvent s'échanger des données dites temps réel, c'est-à-dire appartenant à des séquences temps réel de données collectées au cours du déroulement d'un processus de type industriel. Une séquence temps réel est une suite ininterrompue de données collectées telles que les données qui la constituent et les écarts de temps, ou datation, séparant la collecte de chacune de ces données sont des informations inséparables à traiter simultanément. La durée d'une séquence est indéterminée et indépendante des protocoles de télécommunication sur le réseau 7.

Par ailleurs, les terminaux 8 et 9 reçoivent ces données temps réel du calculateur 3 ou d'une station de diagnostic 5 par les bus ou liaisons 3' et 5'. Pour cela, ils comportent aussi des moyens d'interface de liaison numérique 84 (terminal 8) et 92 (terminal 9), typiquement des pilotes (drivers) caractéristiques du calculateur 3, c'est-à-dire compatibles avec les divers calculateurs 3 et stations 5 possibles, donc compatibles avec les voies CAN, ISO (KWP2000, 9141-2), ou encore J1850, DDLx, DDS. Ces moyens, en même temps que les calculateurs et stations de diagnostic possibles, sont également connus de l'homme du métier.

Les échanges de données temps réel pouvant être bidirectionnels, les terminaux 8 et 9 comportent les mêmes fonctions, donc les mêmes moyens, et notamment :
a) sur le terminal local 8,
   - un module de configuration 86 agencé pour émettre et recevoir une trame physique (couches OSI 1 et 2) de configuration comportant des informations sur les caractéristiques de la liaison à établir : type de véhicule, adresse, type et vitesse de transmission, description des caractéristiques de la trame de transfert des données temps réel (dont la fréquence de collecte) etc...
   - un module 75 (qui pourrait être un microprocesseur) notamment pour autoconfigurer le terminal à émettre ou recevoir des trames de transfert une fois une trame de configuration émise,
   - un module logique 81 d'encapsulation et de décapsulation des données temps réel et de codage et de décodage de trames de transfert,
   - une mémoire tampon 89 des données temps réel reçues du réseau 7,
   - un module 79 de mémorisation des données dans la mémoire tampon 89,
   - un module de lecture 88 des données de la mémoire tampon 89,
   - un module de préparation 77 des données à émettre sur le réseau, pour convertir le format des données temps réel du calculateur 3 en un format encapsulable, les datations relevées y étant jointes (si nécessaire) par ce même module, et des données reçues, pour convertir le format des données temps réel encapsulées en un format des données temps réel du calculateur 3, les datations relevées y étant extraites (si nécessaire) par ce même module,
   - un module 87 de temporisation expliqué plus loin;
b) sur le terminal central 9,
   - un module de configuration 96 agencé pour émettre et recevoir une trame physique (couches OSI 1 et 2) de configuration comportant des informations sur les caractéristiques de la liaison à établir : type de station, adresse, type et vitesse de transmission, description des caractéristiques de la trame de transfert des données temps réel (dont la fréquence de collecte) etc...
   - un module 105qui pourrait être un microprocesseur notamment pour autoconfigurer le terminal à émettre ou recevoir des trames de transfert une fois une trame de configuration reçue,
   - un module logique 91 d'encapsulation et de décapsulation des données temps réel et de codage et de décodage de trames de transfert,
   - une mémoire tampon 101 des données temps réel reçues du réseau 7,
   - un module 102 de mémorisation des données dans la mémoire tampon 101,
   - un module de lecture 98 des données de la mémoire tampon 101,
   - un module de préparation 103 des données à émettre sur le réseau, pour convertir le format des données temps réel de la station de diagnostic 5 en un format encapsulable, les datations relevées y étant jointes (si nécessaire) par ce même module, et des données reçues, pour convertir le format des données temps réel encapsulées en un format des données temps réel de la station de diagnostic 5, les datations relevées y étant extraites (si nécessaire) par ce même module,
   - un module 97 de temporisation expliqué plus loin.

De même, la structure des deux terminaux 8 et 9 est symétrique :
- sur le terminal local 8, les moyens d'interface de liaison numériques 84 sont reliés en sortie au module de préparation 77 lui-même relié au module logique 81 en entrée-sortie des moyens interface réseau 30. Inversement, le module logique 81 est relié en sortie au module de préparation 77 pour conversion des données avant leur écriture par le module 79 dans la mémoire tampon 89, lue elle-même par le module de lecture 88 en entrée des moyens d'interface 84. Le module de temporisation 87 exploite la mémoire « occupé » 31 en sollicitant (a) les moyens interface 84 et (b) le module de lecture 88 pour répéter éventuellement des réponses antérieures du terminal central 9 mémorisées dans la mémoire tampon 89. L'ensemble est géré par le module 75 en fonction des informations recueillies par le module de configuration 86 ;
- sur le terminal central 9, les moyens d'interface de liaison numériques 92 sont reliés en sortie au module de préparation 103 lui-même relié au module logique 91 en entrée-sortie des moyens interface réseau 40. Inversement le module logique 91 est relié en sortie au module de préparation 103 pour conversion des données avant leur écriture par le module 102 dans la mémoire tampon 101, lue elle-même par le module de lecture 98 en entrée des moyens interface 92. Le module de temporisation 97 exploite la mémoire « occupé » 41 en sollicitant (a) les moyens interface 92 et (b) le module de lecture 98 pour répéter éventuellement des réponses antérieures du terminal local 8 mémorisées dans la mémoire tampon 101. L'ensemble est géré par le microprocesseur 105 en fonction des informations recueillies par le module de configuration 96.

Les modules de lecture 88 et 98 peuvent lire et transmettre localement les données temps réel, si nécessaire au rythme des datations qui leur correspondent, aux modules pilote 84 et 92 respectivement comme il sera expliqué plus loin.

Enfin, les modules de temporisation 87 et 97 sont prévus pour émettre des données d'attente vers le calculateur 3 ou vers la station de traitement 5, pour éviter l'interruption du traitement quand une mémoire 31, 41 signale que l'un des terminaux 8, 9 est dans un état occupé. Ces données d'attente peuvent être, selon le procédé employé et expliqué plus loin dans la description du fonctionnement du système, soit un signal d'occupation, soit des données fictives simulant une réponse, en l'occurrence la répétition d'une réponse antérieure effective de la station la plus éloignée du terminal 8 ou 9, soit les deux, suivant la situation.

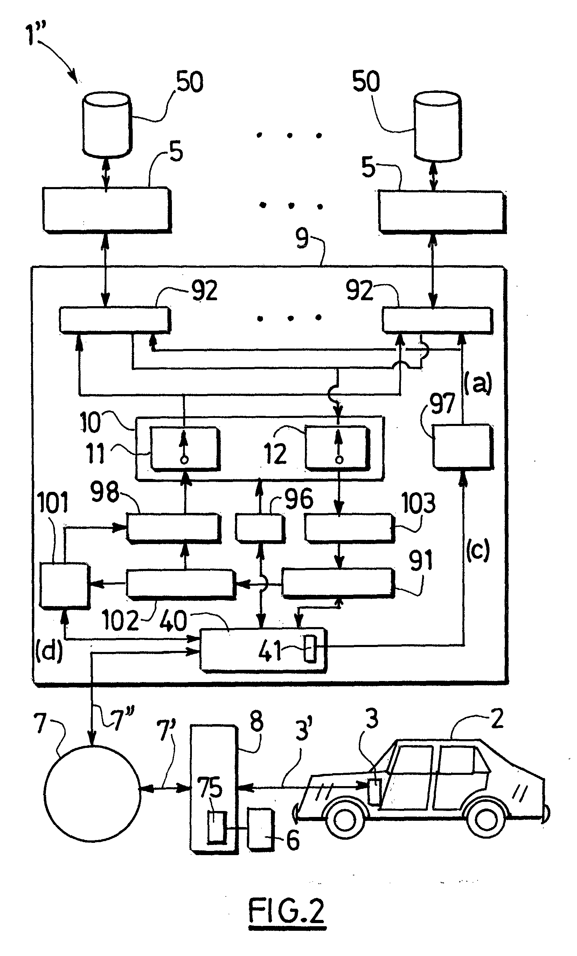

En référence à la figure 2, le système d'aide au diagnostic 1" est une variante du système 1' vu précédemment. Il est adapté pour réaliser un traitement de diagnostic automobile, par exemple localement chez un garagiste, assisté par une station centrale de traitement. Comme dans le système 1', il comporte un calculateur 3, ici embarqué dans le véhicule 2 à diagnostiquer, délivrant des données temps réel sur un bus numérique 3' CAN ou ISO relié, par l'intermédiaire d'une prise diagnostic non représentée, à un terminal local 8, et au moins une station de diagnostic 5 déportée sur un site central et reliée à une base de données techniques 50 et à un terminal 9 également central. Les deux terminaux 8 et 9 peuvent être mis en communication par le réseau public de télécommunications 7 et échanger des données temps réel issues du calculateur 3 et/ou de la station de diagnostic 5.

Les deux terminaux 8 et 9 comportent tous les moyens et modules des terminaux du système 1' vus précédemment et sur la figure 2 et s'ils y sont représentés, ils sont référencés par les mêmes nombres. Le terminal local 8 comporte en plus une interface homme-machine IHM 6 comportant un clavier et éventuellement un écran (non représenté) recevant ses images de la station de diagnostic 5 par le réseau 7 et relié au microprocesseur 75. Le terminal 8 devant être compatible avec toute marque ou type de véhicule, il est équipé d'un jeu de prises diagnostics en conséquence, mises en parallèle sur l'entrée externe 3' des moyens d'interface 84.

Dans cette réalisation, le site central peut regrouper plusieurs stations de diagnostic 5, chacune compatible avec une marque ou un type particulier de véhicules 2 toutes reliées au même terminal central 9 qui comporte alors, en plus des moyens déjà exposés, un module de sélection 10 pour sélectionner la station de diagnostic 5 compatible avec les données temps réel transmises par le calculateur 3 et autant de moyens d'interface de liaison numérique 92 et de prises diagnostic sur les bus 5', compatibles avec les prises diagnostic sur les bus 3', qu'il y a de stations de diagnostic 5 sur le site central. Le module de sélection comporte des commutateurs doubles 11 pour l'émission vers la station sélectionnée et 12 pour la réception des signaux émis par elle.

Le terminal central 9 est alors relié à la station de diagnostic 5 sélectionnée par le module 10 grâce à ceux des moyens d'interface 92 sélectionnés, et ces moyens formatent les données temps réel reçues suivant le même format que celui utilisé par le calculateur 3 et inversement, de sorte que tout se passe comme si la station de diagnostic centrale était directement branchée sur la prise diagnostic du véhicule, excepté que le terminal local 8 et le terminal central 9 comportent les modules de temporisation 87 et 97 pouvant différer, notamment, les séquences ou données temps réel de la durée de transmission par le réseau 7, comme on verra plus loin.

Le fonctionnement des systèmes 1' et 1" va maintenant être expliqué en considérant seulement le système 1 ", puisqu'il comporte au moins toutes les fonctions du système 1'.

En début de diagnostic, le terminal local 8 étant connecté sur la prise diagnostic du bus 3' compatible avec la marque du véhicule et le calculateur 3 du véhicule 2 étant en service, le garagiste introduit des informations techniques IT sur l'IHM 6 pour initialiser la communication entre les terminaux local 8 et central 9, tels que l'adresse réseau du site central, le type du véhicule dans la marque, etc.....

Au cours de cette communication, des trames ATM sont ici échangées : des trames de configuration TC et des trames de transfert TT.

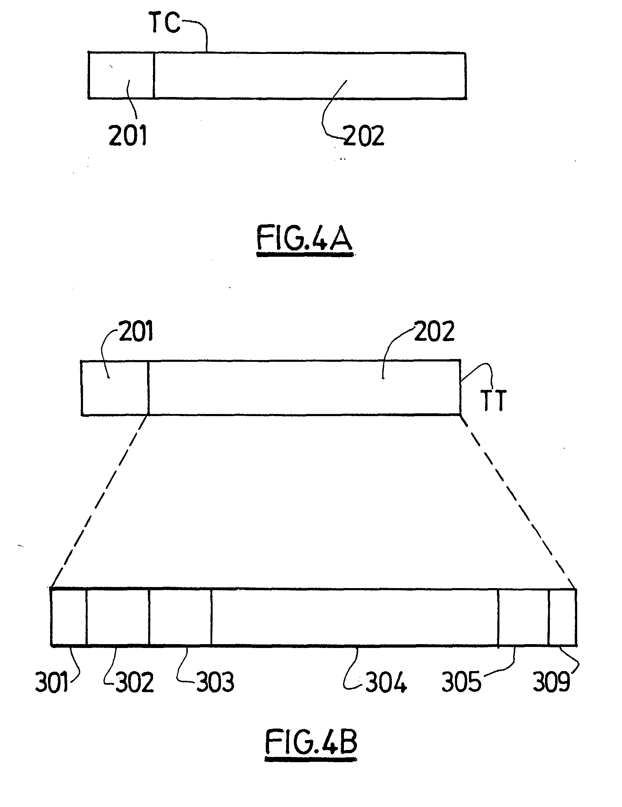

Une trame de configuration TC, comme montré sur la figure 4A, a la structure classique des trames utilisées dans les réseaux ATM, avec une entête 201 et un train de données binaires 202.

Une trame de transfert TT, comme montré sur la figure 4B, a extérieurement la structure ATM précédente, les données binaires 202 étant le résultat de la conversion d'une trame d'échanges de données CAN, ISO, ... sur la ligne série VCI 3', c'est-à-dire encore ici une trame SDLC (Synchronous Data Link Control) comportant classiquement un séparateur de tête 301, une adresse 302, un mot de contrôle 303, un train de données binaires 304, les bits de parité 305 et un séparateur de queue 309. Ici, la trame ATM encapsule la trame SDLC, mais pas intégralement, les contenus de l'entête 201 pouvant comporter l'adresse 302 et le mot de contrôle 303, et ces derniers étant, dans la présente application, redondantes, ils peuvent être supprimés, libérant de la place pour les données 304 qui peuvent être organisées selon un format F à capacité augmentée.

En référence aux figures 1, 2, 3A, 3B, en début d'une phase de configuration φC, le module 75, recevant ces informations du clavier de l'IHM 6, génère alors une trame de configuration TC, constituée, comme précisé ci-dessus, de demande de diagnostic contenant les informations IT, fait établir par les moyens d'interface 30 une liaison physique 10 sur le réseau entre les terminaux local 8 et central 9, lequel réseau transmet la trame de configuration TC. Le module de configuration 86, se met en attente d'une réponse du terminal central de la station de diagnostic 9.

On voit ainsi que les données émises par le terminal local 8 sont issues du calculateur 3 embarqué dans le véhicule automobile 2, lequel calculateur détermine des caractéristiques spécifiques introduites dans la trame de configuration.

Les moyens d'interface 40 du terminal central 9 reçoivent la trame de configuration TC, la transmettent à son module de configuration 96. Le module 96 convertit les données de la trame, en extrait les informations IT et, de ces informations, le type de véhicule, commande les commutateurs doubles 11 et 12 pour ne sélectionner qu'une seule station de diagnostic 5, celle correspondant au type de véhicule extrait, puis effectue, à la station sélectionnée, une demande de session de diagnostic par l'intermédiaire du module d'interface 92. La station de diagnostic 9 crée alors une session S de diagnostic pour le type de véhicule, lui renvoie par un message R0 la référence RS de cette session et se met en attente A.

On voit ainsi que les données émises par le terminal central sont issues du serveur spécifique (la station de diagnostic sélectionnée) choisi parmi un ensemble de serveurs par le terminal en fonction des caractéristiques spécifiques contenues dans la trame de configuration.

Enfin, le module de configuration 96 transmet la référence RS de la session S, l'adresse réseau du terminal local 8, le type et la vitesse de transmission extraites des informations techniques IT, le format logique des échanges etc... au module logique 91, aux moyens d'interface 40, et au module de préparation 103, ces modules mémorisant l'association de la référence RS aux informations IT.

Le microprocesseur 105 du terminal 9 génère alors une trame de configuration TC en réponse de demande de diagnostic pour établir la liaison logique qui sera utilisée par la suite, mais pourrait aussi générer directement une trame de transfert TT, constituée comme précisé ci-dessus, si les informations IT indiquent que le terminal local 8 est déjà configuré. Cette dernière trame de configuration constitue un message C0 émis sur le réseau par les moyens interface 40.

Dans les deux terminaux 8 ou 9, une trame de transfert TT remplaçant une trame TC est traitée comme une trame de transfert ordinaire à la différence près que, en réception, c'est le module de configuration 86 qui est sollicité pour effectuer la configuration du terminal, ou sa mise à jour de logiciel, ou les deux, selon les cas, de la même façon qui a été vue plus haut.

La liaison de configuration effectuée peut non seulement servir à compléter la configuration du terminal local 8 mais aussi, par exemple, à télécharger des logiciels de mise à jour des modules logique 81 et/ou de préparation 77, le microprocesseur 75, ou d'autres modules.

Enfin, le module de configuration 86 émet une trame de transfert ordinaire E0 contenant un message P indiquant à la station 5 que le terminal local 8 et le calculateur 3 sont prêts, établissant ainsi une liaison logique entre le calculateur 3 et la station de diagnostic 5 sélectionnée, et terminant la phase de configuration φC.

Une phase de session de diagnostic φS, suivant immédiatement cette phase de configuration, est initialisée par une première requête R1, T1, de données temps réel, émise sous trame TT par le terminal central 9 vers le terminal local 8, qui décapsule, convertit, et transmet au calculateur 3.

Le terminal local 8, ayant reçu sur son interface de ligne 84, en retour du calculateur, les données temps réel D1, les convertit dans le format F et peut les organiser en séquences datées, par le module de préparation 77, et les encapsuler selon la structure de la trame TT par le module logique 81. Il transmet le message obtenu sur le réseau par les moyens d'interface réseau 30 ou 40.

Le terminal central 9 réceptionne la trame T'1 par ses moyens d'interface réseau 40, décapsule les données D1 par son module logique 91, les reconvertit par le module de préparation 103, dans le format initial avant conversion par le module 77 de l'autre terminal. et les mémorise, par le module de mémorisation 102, dans la mémoire tampon 101 ou 89, à disposition de la session S de la station de diagnostic 5 quand les données sont lues, sur action du module de temporisation 97, par le module de lecture 98 puis transmises par l'interface de ligne 92, ce dernier étant sélectionné par le module de sélection 10 comme indiqué plus haut.

Le fonctionnement des modules de temporisation 97 ou 87 va maintenant être expliqué.

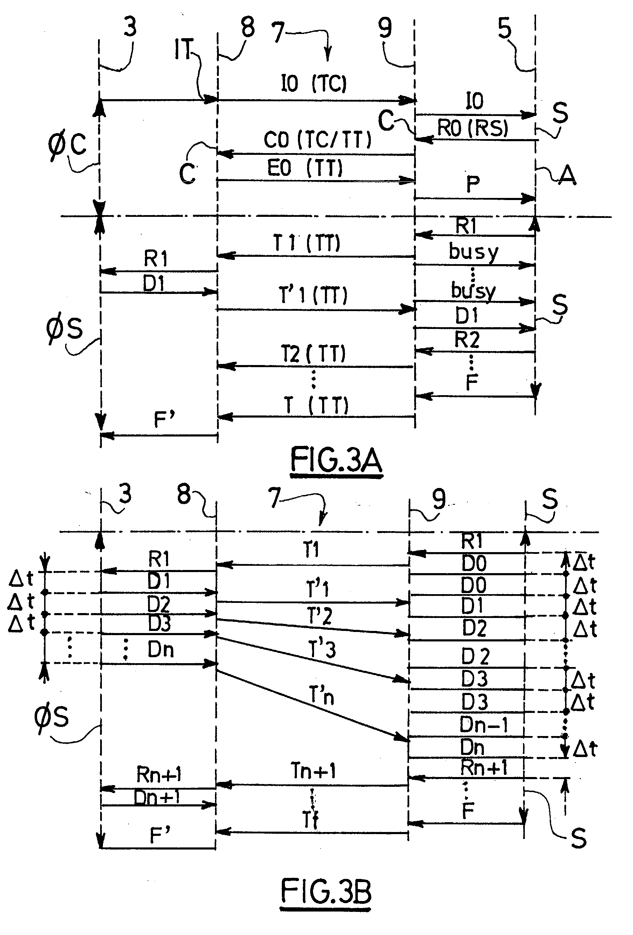

Entre l'instant d'émission de la requête R1 et de la réception des données correspondantes D1 par la station de diagnostic 5, pour éviter le blocage de la station, en référence à la figure 3A, le module 97 du terminal 9 lui envoie (a) un signal d'occupation « busy » identique au signal d'occupation du calculateur 3, ou, selon un mode préféré de fonctionnement, en référence à la figure 3B, le module 97 du terminal 9 envoie (b) au module de lecture 98 un ordre de lecture dans la mémoire tampon 101 des dernières données y mémorisées, D0 ou D1 ou D2, ... et d'envoi vers la station 5, comme s'il s'agissait de la réponse à la dernière requête R1 ou R2 ou R3 .... Selon ce mode préféré, les données mémorisées D0, D1, D2, ... sont envoyées de façon répétitive à la station 5 avec une période de répétition Δt correspondant à la période de collecte des données dans le calculateur 3 tant que la réception des données D correspondant à la requête R n'est pas arrivée. Pour cela, la période Δt peut être une donnée jointe aux données temps réel ou, à chaque donnée temps réel peut être jointe une datation t.

Dans ce cas, en l'absence de réponses du calculateur 3, le terminal 9 émet vers la station 5 des réponses fictives du calculateur, délivrées au rythme d'émission des données temps réel du calculateur. Ce dernier mode de fonctionnement permet de rétablir approximativement la datation des données temps réel.

Enfin, pour ces deux modes de fonctionnement, si une trame émise par un terminal 8 arrive sur le terminal 9 alors que ce dernier est occupé , par exemple à cause d'un échange avec un autre terminal local, il est mémorisé (d) dans la mémoire tampon 101 en attendant la libération du terminal, et la mémoire 41 est exploitée (c) par le module de temporisation 97 qui envoie un signal d'occupation aux moyens d'interface 92 concernés pour éviter un abandon prématuré de la session S.

Selon un mode de fonctionnement plus élaboré, à chaque donnée temps réel est jointe une datation t et il est alors possible de simuler dans le terminal 9, ou la station 5, la collecte des données temps réel du calculateur 3.

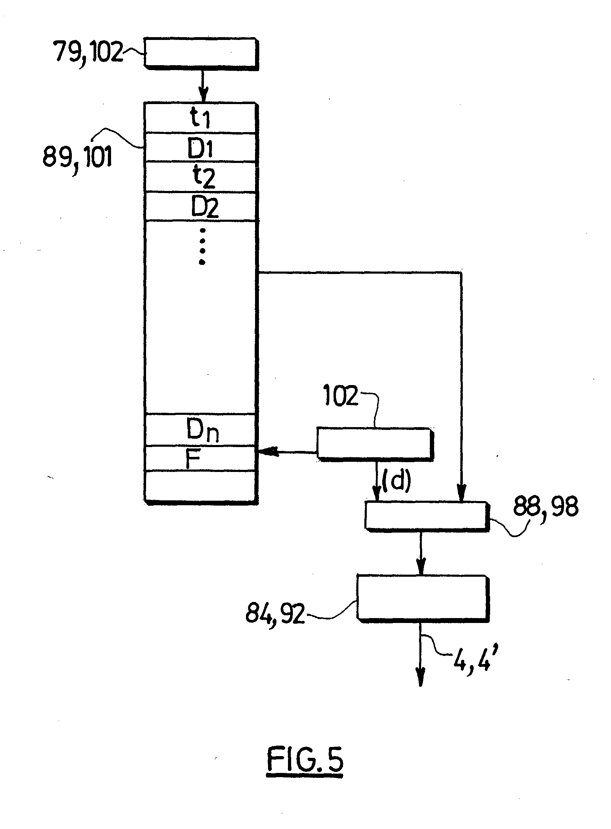

Pour cela, en référence à la figure 5, la mémoire tampon 101 contient les données D1, D2, ..., Dn d'une séquence de données temps réel, close par un délimiteur F, nécessaire pour un diagnostic particulier, et à chaque donnée de la séquence D1, D2, ... , Dn a été jointe une datation t1, t2, ... , tn de ces données, effectuée par le module de préparation 77.

Le module de lecture 98 reçoit du module de mémorisation 102 un message (d) de fin de séquence de données temps réel quand ce dernier écrit une indication F de cette séquence dans la mémoire 101. Dès lors, au temps t, il lit dans la mémoire 101 et émet sur les moyens d'interface de ligne 92 la donnée D1 au temps t, la donnée D2 au temps t + (t2 - t1), et ainsi de suite jusque la donnée Dn au temps t + (tn - t1).

On rétablit ainsi en entrée de la station de diagnostic 5 la séquence des données temps réel initialement obtenue sur le calculateur 3, dans un format CAN, ISO ou autre ... .

## Revendications

1. Procédé de télécommunication entre un terminal numérique central (9) et au moins un terminal numérique distant (8), pour transférer, sur un réseau de transmission déterminé (7), des données délivrées en temps réel selon un format déterminé, procédé dans lequel :
a) on établit une liaison physique sur le réseau (7) entre les terminaux central (9) et distant (8) et on transmet une trame de configuration TC,
b) à partir de la trame de configuration, on configure les terminaux central (9) et distant (8),
c) on établit une liaison logique sur le réseau entre les terminaux (9, 8) et
d) on transfère les données selon une trame de transfert TT.

2. Procédé selon la revendication 1, dans lequel, pour transférer les données,
a) le terminal émetteur, central (9) ou distant (8), encapsule les données,
b) transmet les données encapsulées,
c) le terminal récepteur, distant (8) ou central (9), réceptionne (40) les données et
d) décapsule (91) les données.

3. Procédé selon l'une des revendications 1 et 2, dans lequel, pour éviter un blocage à l'une quelconque des stations de traitement, le terminal qui lui est le plus proche lui envoie (97) un signal d'occupation identique au signal d'occupation de l'autre station de traitement.

4. Procédé selon l'une des revendications 1 à 3, dans lequel, en l'absence de réponses de la station émettrice, le terminal récepteur émet vers la station réceptrice des réponses fictives de la station émettrice, délivrées au rythme d'émission des données temps réel de la station émettrice.

5. Procédé selon la revendication 4, dans lequel les réponses fictives sont la répétition de la dernière réponse effective de la station émettrice.

6. Procédé selon l'une des revendications 2 à 5, dans lequel on encapsule les données avec des données de temps sur le terminal émetteur et on émet ces données après décapsulation, en sortie du terminal récepteur, à un rythme respectant les données de temps desdites données.

7. Procédé selon l'une des revendications 1 à 6, **caractérisé par le fait que** les données émises par le terminal distant (8) sont issues d'un calculateur embarqué (3) d'un véhicule automobile, lequel détermine des caractéristiques spécifiques dans la trame de configuration.

8. Procédé selon l'une des revendications 1 à 7, **caractérisé par le fait que** les données émises par le terminal central (9) sont issues d'un serveur spécifique choisi parmi un ensemble de serveurs par ledit terminal en fonction de caractéristiques spécifiques contenues dans la trame de configuration.

9. Procédé selon la revendication 8, **caractérisé par le fait que** le terminal central (9) émet des données comportant des logiciels de mise à jour vers le terminal local (8).

10. Système (1') pour la mise en oeuvre du procédé selon l'une des revendications 1 à 9, comportant un terminal central (9) relié à une station de traitement (5) et au moins un terminal local (8) relié à un calculateur (3) délivrant des données temps réel, **caractérisé par le fait que** les terminaux central (9) et local (8) sont reliés par un réseau de télécommunication public (7).

11. Système (1") d'aide au diagnostic de fonctionnement d'un véhicule automobile (2) mettant en oeuvre le procédé d'une des revendications 1 à 9, comportant un calculateur (3) délivrant des données temps réel sur un bus numérique (3'), le système (1") comportant une station de diagnostic (5) pouvant être connecté sur le bus numérique (3') , **caractérisé par le fait que** la station de diagnostic (5) est déportée sur un site central et que les données temps réel lui sont transmises, via un réseau de télécommunication (7), par un terminal local (8) connecté sur ledit bus (3').

12. Système selon la revendication 11, dans lequel le site central regroupe plusieurs stations de diagnostic (5) chacune compatible avec une marque ou un type particulier de véhicules (2) et un terminal central (9) comportant un module de sélection (10) agencé pour sélectionner la station de diagnostic (5) compatible avec les données temps réel transmises.

13. Système selon l'une des revendication 10 et 12, dans lequel les terminaux local (8) et central (9) comportent chacun un module de configuration (86, 96) agencé pour émettre et recevoir une trame physique de configuration TC et un module (75, 105) pour configurer lesdits terminaux (8,9).

14. Système selon l'une des revendications 10 à 13, dans lequel les terminaux local (8) et central (9) comportent chacun un module logique (81, 91) d'encapsulation et de décapsulation des données temps réel et de codage et de décodage de trames de transfert TT.

15. Système selon l'une des revendications 10 à 14, dans lequel le terminal local (8) ou central (9) comporte une mémoire (89, 101) de stockage des données temps réel reçues du réseau (7), un module (79, 102) de mémorisation et un module de lecture (88, 98) desdites données, et un module de préparation (77, 103) des données temps réel à émettre sur le réseau, les datations relevées y étant jointes.

16. Système selon la revendication 15, dans lequel le module de lecture (88, 98) lit et transmet localement les données temps réel au rythme des datations qui leur correspondent.

17. Système selon l'une des revendications 11 à 16, dans lequel le terminal local (8) ou central (9) comporte au moins un pilote (84, 92), interface entre le terminal (8, 9) et le calculateur (3) ou la station de diagnostic (5) sélectionnée, formatant les données temps réel suivant le même format que celui utilisé par la station de diagnostic (5) ou par le calculateur (3).

18. Système selon l'une des revendications 10 à 17, **caractérisé par le fait que** le terminal local (8) ou le terminal central (9) comporte un module de temporisation (87, 97) agencé pour émettre des données d'attente vers le calculateur (3) ou vers la station de diagnostic (5) pour éviter l'interruption du traitement ou de la session de diagnostic.

19. Système selon l'une des revendications 10 à 18, **caractérisé par le fait que** le terminal local (8) ou le terminal central (9) comporte un module de temporisation (87, 97) agencé pour émettre un signal d'occupation vers le calculateur (3) ou vers la station de diagnostic (5) pour éviter l'interruption du traitement ou de la session de diagnostic quand une mémoire (31, 41) signale que l'un des terminaux (8, 9) est dans un état occupé
